# EUROPEAN PATENT APPLICATION

(11) **EP 4 708 479 A1**
(43) Date of publication of application: **11.03.2026**
(21) Application number: 24822823.1
(22) Date of filing: 14.06.2024
(51) Int. Cl.: H01M 50/148, H01M 50/569, H01M 10/052

(54) **COVER PLATE ASSEMBLY AND BATTERY**

(30) Priority: 15.06.2023 CN 202310716945
(71) Applicant: Eve Power Co., Ltd., Jingmen, Hubei 448000 (CN)
(72) Inventor: YUAN, Dingding, Jingmen, Hubei 448000 (CN); FANG, Zhenxing, Jingmen, Hubei 448000 (CN); SUN, Fei, Jingmen, Hubei 448000 (CN); GUO, Jiahao, Jingmen, Hubei 448000 (CN); CHEN, Xianyang, Jingmen, Hubei 448000 (CN); HE, Wei, Jingmen, Hubei 448000 (CN); LIU, Jincheng, Jingmen, Hubei 448000 (CN)
(74) Representative: Zhu, Puxing
(86) International application number: PCT/CN2024/099354
(87) International publication number: WO 2024/255876

(57) **Abstract**

The present disclosure provides a cover plate assembly and a battery. The cover plate assembly is mounted on a housing with an accommodation cavity, and comprises: a cover plate, provided with a first mounting hole in communication with the accommodation cavity; a collection component, located in the accommodation cavity and configured to obtain a parameter information inside the housing; a lower connection part, of which a first end is located in the first mounting hole and a second end is in communication connection with the collection component; and, an upper connection part, of which a first end is detachably in communication connection with the first end of the lower connection part and a second end passes through the first mounting hole.

## Description

The present disclosure claims priority to Chinese Patent Application No. 2023107169452, filed on June 15, 2023, the disclosure of which are incorporated herein by reference in their entirety.

### TECHNICAL FIELD

The present disclosure relates to the field of battery technology, and in particular to a cover plate assembly and battery.

### BACKGROUND

A lithium battery is widely used in industries such as automobiles, electronics, and energy storage systems because of their advantages of small size, high energy density, long service life, and environmental friendliness. During use, the lithium battery generates heat and gas due to charge-discharge cycle. A large amount of heat can cause significant difficulties in the use and maintenance of the lithium battery, and a generated gas can cause a battery cell to expand.

### SUMMARY

The battery in related technologies cannot monitor internal battery data in real time, thus it is difficult to take responsive measures to real-time situations.

The present disclosure provides a cover plate assembly mounted on the housing. The housing is provided with an accommodation cavity, in which the cell pack is provided. The cover plate assembly includes a cover plate, a collection component, a lower connection part and an upper connection part. The cover plate is mounted on the housing and is provided with a first mounting hole in communication with the accommodation cavity; the collection component is located in the accommodation cavity and configured to obtain a parameter information inside the housing; a first end of the lower connection part is located in the first mounting hole, and a second end of the lower connection part extends into the accommodation cavity and is in communication connection with the collection component; a first end of the upper connection part is located in the first mounting hole, and is detachably in communication connection with the first end of the lower connection part, and a second end of the upper connection part passes through the first mounting hole.

The present disclosure also provides a battery including a battery cell pack, the housing, the collection component, the lower connection part and the upper connection part. The housing is provided with the accommodation cavity, in which the cell pack is provided; the cover plate is mounted on the housing and is provided with the first mounting hole in communication with the accommodation cavity; the collection component is located in the accommodation cavity and configured to obtain a parameter information inside the housing; the first end of the lower connection part is located in the first mounting hole, and the second end of the lower connection part extends into the accommodation cavity and is in communication connection with the collection component; the first end of the upper connection part is located in the first mounting hole, and is detachably in communication connection with the first end of the lower connection part, and the second end of the upper connection part passes through the first mounting hole.

### BENEFICIAL EFFECTS

By collecting the parameter information inside the housing and transmitting the parameter information collected by the collection component to the external device through the upper connection part and the lower connection part, a battery cell provided in this disclosure can monitor the internal data of the battery in real time, thereby enabling the responsive measures to be taken based on the real-time situations.

The battery provided in this disclosure includes a cell pack, a housing and the cover plate assembly described above, which can collect the parameter information inside the housing and transmit the parameter information collected by the collection component to the external device through the upper connection part and the lower connection part. Thus, it is possible to monitor the internal data of the battery in real time, thereby enabling the responsive measures to be taken based on the real-time situations.

### BRIEF DESCRIPTION OF DRAWINGS

FIG. 1 is a structural diagram of a cover plate assembly provided by some embodiments.
FIG. 2 is a partial structural diagram of the cover plate assembly provided by some embodiments.
FIG. 3 is a structural diagram of a first fixing part provided by some embodiments.
FIG. 4 is a structural diagram of an upper connection part provided by some embodiments.
FIG. 5 is a structural diagram of a lower connection part provided by some embodiments.
FIG. 6 is an enlarged schematic view of point A in FIG. 1.
FIG. 7 is a sectional view showing a partial structure of the cover plate assembly provided by some embodiments.
FIG. 8 is another sectional view showing the partial structure of the cover plate assembly provided by some embodiments.
FIG. 9 is a sectional view of a protective sheath provided by some embodiments.
FIG. 10 is a structural diagram of a housing, a cell pack and a collection component provided by some embodiments.

### Explanation of reference numerals:

cover plate 101, transition protrusion 1011, seventh recessed part 1012, first mounting hole 1013, fourth recessed part 1014, upper connection part 102, first optical fiber 1021, first outer shell 1022, first inserting pin 1023, lower connection part 103, second optical fiber 1031, second outer shell 1032, second inserting pin 1033, first fixing part 1041, second fixing part 1042, first recessed part 1043, clamping slot 1044, first sub-hole 1045, fifth recessed part 1046, second flange 1047, base part 1048, second sub-hole 1049, press plate 105, clamping part 1051, fourth mounting hole 1052, protective sheath 106, cone-shaped body 1061, first flange 1062, sixth recessed part 1063, sleeve 107, sealing part 108, terminal post 109, injection hole 110, explosion-proof valve 111, lower plastic part 112, third mounting hole 1121, second recessed part 1122, third recessed part 1123, housing 201, cell pack 202, collection component 240, sensor 241, connecting wire 242.

### DETAILED DESCRIPTION

In the description of this disclosure, unless otherwise expressly specified or limited, the terms "connected", "coupled" and "fixed" should be understood in a broad sense. For example, these terms can refer to fixed connection, detachable connection, or integral formation; mechanical connection or electrical connection; direct connection, indirect connection through intermediate media, or internal communicating connection between two components or an interaction relationship between two components. For those skilled in the art, the specific meanings of these terms in this disclosure can be understood based on the specific situations.

In this disclosure, unless otherwise expressly specified or limited, the expression "the first feature is above or below the second feature" may include direct contact between the first feature and the second feature, or may include contact between the first feature and the second feature through another feature between them instead of direct contact. Additionally, the expression "the first feature is over, above, and on top of the second feature" includes "the first feature is directly above or diagonally above the second feature" and "the horizontal height of the first feature is higher than that of the second feature". The expression "the first feature is under, below, and beneath the second feature" includes "the first feature is directly below or diagonally below the second feature" and "the horizontal height of the first feature is lower than that of the second feature".

In the description of this disclosure, the terms such as "up", "down", "left", "right", "front", "back", and etc. that indicate directional or positional relationships are based on the directional or positional relationships shown in the drawings. These terms are used for the convenience of description and simplification of operations, and are not intended to indicate or imply that the device or element must have a specific direction or be constructed and operated in a particular direction. Therefore, they should not be understood as a limitation on this disclosure. Additionally, the terms "first" and "second" are used to distinguish in terms of description and do not have a specific meaning.

A lithium battery is widely used in industries such as automobiles, electronics, and energy storage systems because of their advantages of small size, high energy density, long service life, and environmental friendliness. During use, the lithium battery generates heat and gas due to charge-discharge cycle. A large amount of heat can cause significant difficulties in the use and maintenance of the lithium battery, and a generated gas can cause a battery cell to expand. In related technologies, a heat dissipation system is disposed inside the battery, through which the accumulated heat can be dissipated. However, the heat can only be dissipated passively, and the information such as the temperature and pressure of the battery cannot be obtained. Thus, the data inside the battery, such as temperature and pressure, cannot be monitored in real time, making it difficult to take responsive measures based on real-time situations.

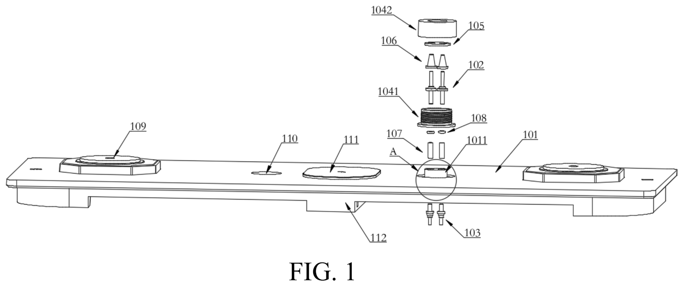

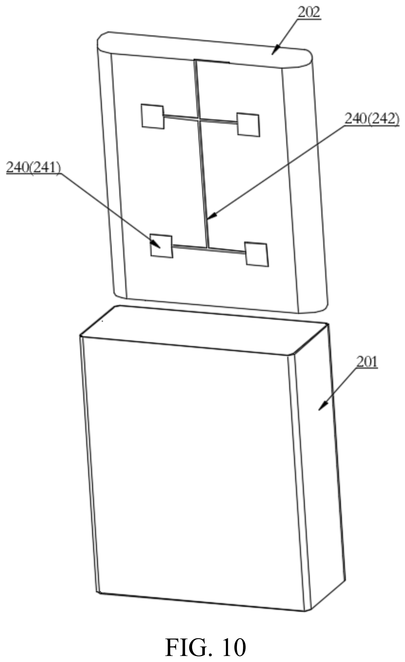

As shown in FIG. 1 and FIG. 10, embodiments of the present disclosure provide a cover plate assembly mounting on a housing 201 of a battery. The cover plate assembly includes a cover plate 101, a collection component 240, an upper connection part 102 and a lower connection part 103.

The housing 201 is provided with an accommodation cavity for accommodating a cell pack 202. The cell pack 202 is fixedly provided in the accommodation cavity. The cover plate 101 is mounted on the housing 201, and the cover plate 101 is provided with a first mounting hole 1013 in communication with the accommodation cavity.

The collection component 240 is located in the accommodation cavity and is configured to obtain the parameter information inside the housing 201. The parameter information includes a temperature of the cell pack 202, a pressure inside the housing 201, specifically, the pressure refers to the pressure exerted by the gas inside the housing 201 on the housing 201 itself. A first end of the lower connection part 103 is located in the first mounting hole 1013, and a second end of the lower connection part 103 extends into the accommodation cavity and is in communication connection with the collection component 240. A first end of the upper connection part 102 is located in the first mounting hole 1013, and is detachably in communication connection with the first end of the lower connection part 103. That is, the upper connection part 102 is detachably in communication connection with the lower connection part 103. A second end of the upper connection part 102 passes through the first mounting hole 1013, so as to transmit the parameter information collected by the collection component 240 to an external device.

In the present disclosure, by collecting the parameter information inside the housing 201 through the collection component 240, and transmitting the collected parameter information to the external device through the upper connection part 102 and the lower connection part 103, it is possible to monitor the internal data of the battery in real time, thereby enabling the responsive measures to be taken based on the real-time situations.

In one embodiment, the cover plate assembly further includes a fixing part. The cover plate 101 is provided with a transition protrusion 1011, which is provided with the first mounting hole 1013 in communication with the accommodation cavity.

The fixing part is mounted on the cover plate 101 and is provided with a second mounting hole in communication with the first mounting hole 1013. The second end of the upper connection part 102 passes through the first mounting hole 1013 and the second mounting hole, so as to transmit the parameter information collected by the collection component 240 to the external device.

In the present disclosure, by collecting the parameter information inside the housing 201 through the collection component 240, transmitting the collected parameter information to the external device through the upper connection part 102 and the lower connection part 103, and fixing the upper connection part 102 on the transition protrusion 1011 of the cover plate 101 by using the fixing part, it is possible to stably monitor the internal data of the battery in real time, thereby enabling the responsive measures to be taken based on the real-time situations.

As shown in FIG. 1, FIG. 2 and FIG. 3, in one embodiment, the cover plate assembly is mounted in the housing 201 and includes the cover plate 101, the collection component 240, the lower connection part 103, the upper connection part 102 and the fixing part. The housing 201 is provided with the accommodation cavity, and the cell pack 202 is fixedly provided in the accommodation cavity. The cover plate 101 is mounted on the housing 201, and the cover plate 101 is provided with the transition protrusion 1001, which is provided with the first mounting hole 1013 in communication with the accommodation cavity.

The fixing part includes a first fixing part 1041 and a second fixing part 1042. The first fixing part 1041 is sleeved on the transition protrusion 1001. For example, the first fixing part 1041 is provided with an inner chamber, in which the transition protrusion 1011 is located. An edge of the first fixing part 1041 is welded with the cover plate 101, thereby fixing the first fixing part 1041 on the cover plate 101. The first fixing part 1041 is provided with a first sub-hole 1045 in communication with the first mounting hole 1013.

In some embodiments, the first fixing part 1041 can be clamped with the transition protrusion 1011, thereby preventing a relative rotation between the first fixing part 1041 and the transition protrusion 1011.

In some embodiments, the first fixing part 1041 includes a base part 1048 and a second flange 1047. The base part 1048 is provided with an outer thread, and the second flange 1047 is arranged around the base part 1048. The cover plate 101 is provided with a seventh recessed part 1012 arranged around the transition protrusion 1011. The second flange 1047 is located in the seventh recessed part 1012 and is welded with the cover plate 101. It should be understood that, in some embodiments, the cover plate 101 may not have the transition protrusion 1011, and the first fixing part 1041 is directly connected with the cover plate 101.

The second fixing part 1042 is sleeved on and detachably connected with the first fixing part 1041. For example, an outer side wall of the first fixing part 1041 is provided with the outer thread, an inner side wall of the second fixing part 1042 is provided with an inner thread, and the first fixing part 1041 and the second fixing part 1042 are in a threaded connection. The second fixing part 1042 is provided with a second sub-hole 1049 in communication with the first sub-hole 1045. Thus, in this embodiment, the second mounting hole includes the first sub-hole 1045 and the second sub-hole 1049. In some embodiments, the second fixing part 1042 can also be clamped with the first fixing part 1041.

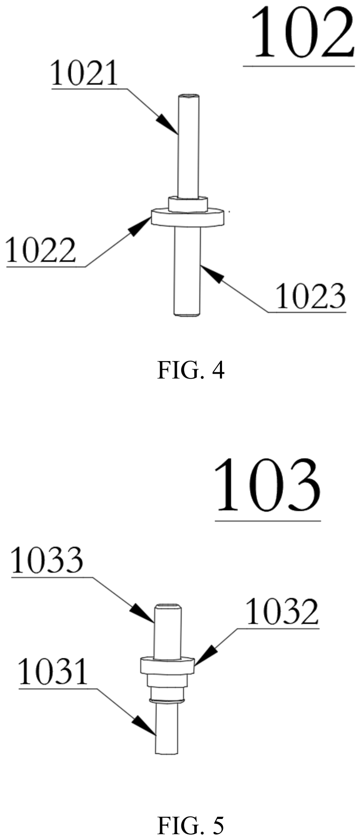

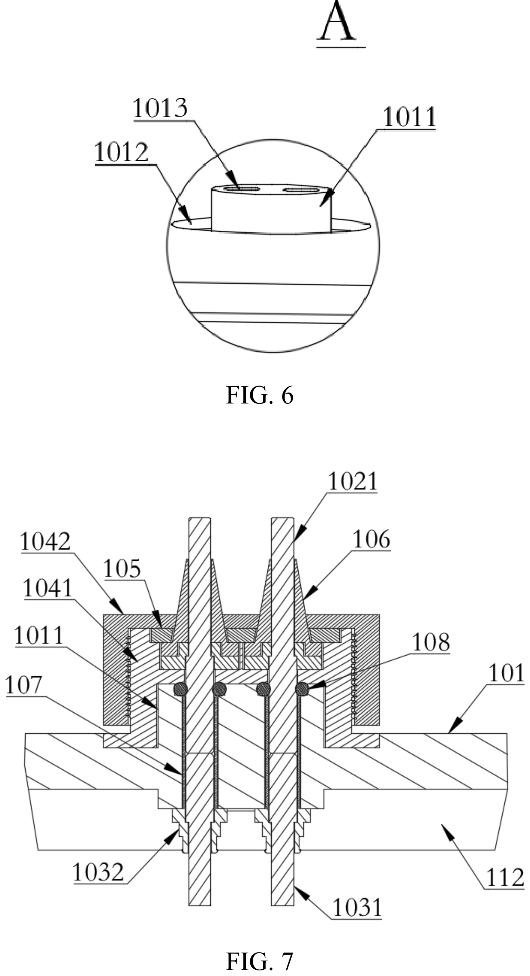

As shown in FIG. 4, FIG. 5 and FIG. 6, in some embodiments, the upper connection part 102 includes a first optical fiber connector and a first optical fiber 1021. The first optical fiber connector includes a first outer shell 1022 and a first inserting pin 1023. One end of the first inserting pin 1023 is mounted in the first outer shell 1022, and the other end of the first inserting pin 1023 is mounted in the first mounting hole 1013. The first inserting pin 1023 serves as an alignment mechanism for the first optical fiber 1021, facilitating a communication connection with a second optical fiber 1031. There is a through hole in the middle of the first inserting pin 1023, and a diameter of the through hole is larger than that of the first optical fiber 1021, which is located in the through hole.

The lower connection part 103 includes a second optical fiber connector and a second optical fiber 1031. The second optical fiber connector includes a second outer shell 1032 and a second inserting pin 1033. One end of the second inserting pin 1033 is mounted in the second outer shell 1032, and the other end of the second inserting pin 1033 is mounted in the first mounting hole 1013. Similar to the upper connection part 102, the second inserting pin 1033 of the lower connection part 103 also serves as the alignment mechanism for the second optical fiber 1031, facilitating the communication connection with the first optical fiber 1021. There is a through hole in the middle of the second inserting pin 1033, and the diameter of the through hole is larger than that of the second optical fiber 1031, which is located in the through hole. The second optical fiber 1031 is in communication connection with the collection component 240.

The first inserting pin 1023 and the second inserting pin 1033 abut against each other in the first mounting hole 1013, thereby enabling the first optical fiber 1021 and the second optical fiber 1031 to be in communication connection. By providing the first inserting pin 1023 and the second inserting pin 1033, it facilitates the alignment of the first optical fiber 1021 and the second optical fiber 1031 when the upper connection part 102 and the lower connection part 103 are in communication connection. Additionally, because the upper connection part 102 is detachably connected with the lower connection part 103, it facilitates replacement and maintenance, addressing the issue in related technologies where the signal connection device cannot be changed.

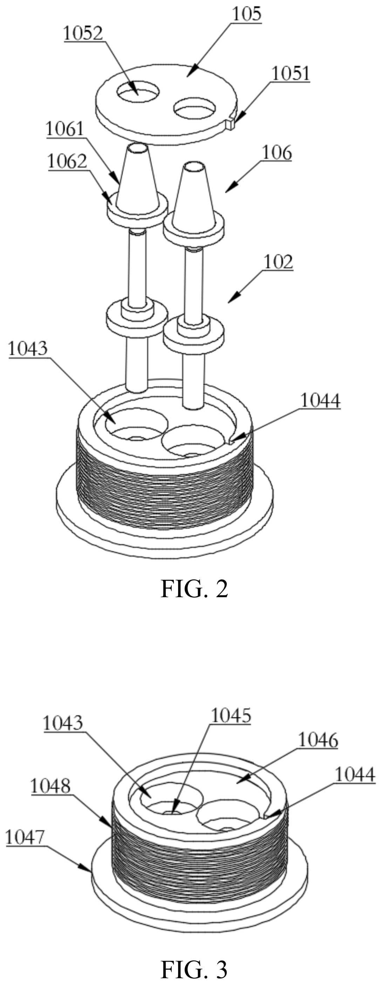

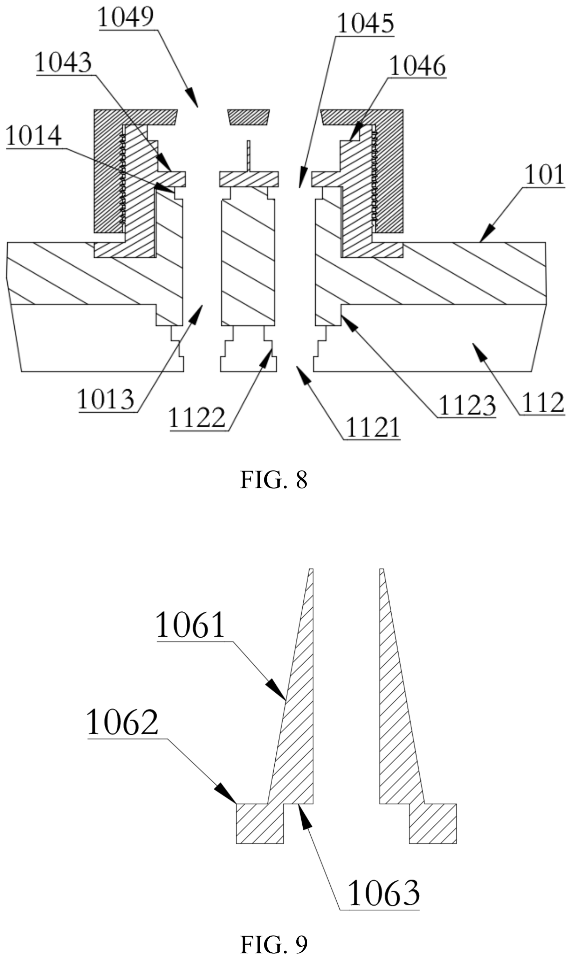

As shown in FIG. 3, FIG. 7 and FIG. 8, in one embodiment, the first fixing part 1041 is provided with a first recessed part 1043 arranged around a perimeter of the first sub-hole 1045. The first outer shell 1022 is mounted in the first recessed part 1043, so as to limit the first outer shell 1022 by using the first fixing part 1041, thereby ensuring a stability of the connection of the upper connection part 102. The first optical fiber 1021 passes through the second sub-hole 1049, so as to transmit the parameter information collected by the collection component 240 to the external device.

As shown in FIG. 2, FIG. 3, FIG. 7 and FIG. 8, in one embodiment, the cover plate assembly further includes a press plate 105. The first fixing part 1041 is provided with a fifth recessed part 1046 arranged around a perimeter of the first recessed part 1043. The press plate 105 is mounted in the fifth recessed part 1046 and abuts against the second fixing part 1042. The press plate 105 is provided with a fourth mounting hole 1052. The first optical fiber passes through the fourth mounting hole 1052 and the second sub-hole 1049 successively and is connected with the external device. In some embodiments, a sidewall of the fifth recessed part 1046 is also provided with a clamping slot 1044, and the press plate 105 is provided with a clamping part 1051 that corresponds to the clamping slot 1044. The clamping part 1051 is clamped in the clamping slot 1044, thereby limiting the press plate 105 by the clamping part 1051 and the clamping slot 1044, and preventing the press plate 105 from rotating in the fifth recessed part 1046.

As shown in FIG. 1, FIG. 2, FIG. 7 and FIG. 9, in one embodiment, the cover plate assembly further includes a protective sheath 106 sleeved on the first optical fiber 1021, and the first optical fiber 1021 is at least partially exposed from the protective sheath 106. Thus, the first optical fiber 1021 and a sidewall of the second sub-hole 1049 are separated by the protective sheath 106, so as to prevent the first optical fiber 1021 from being scratched by the sidewall of the second sub-hole 1049. In some embodiments, the protective sheath 106 includes a cone-shaped body 1061 and a first flange 1062 arranged around the cone-shaped body 1061. The shape of the first flange 1062 matches that of the first recessed part 1043, so as to be clamped in the first recessed part 1043. Additionally, the first flange 1062 abuts against the press plate 105, so that the upper connection part 102 is limited by the second fixing part 1042, the press plate 105 and the first flange 1062. In some embodiments, a side of the protective sheath 106 facing the cell pack 202 is provided with a sixth recessed part 1063, and a part of the first outer shell 1022 is clamped in the sixth recessed part 1063, so that the upper connection part 102 is fixed by the protective sheath 106.

As shown in FIG. 1, FIG. 2, FIG. 7 and FIG. 8, in one embodiment, the cover plate assembly further includes a lower plastic part 112 located between the cover plate 101 and the cell pack 202. The lower plastic part 112 is provided with a third mounting hole 1121 and a second recessed part 1122 arranged around a perimeter of the third mounting hole 1121. The second outer shell 1032 is mounted in the second recessed part 1122, and an end of the second outer shell 1032 away from the cell pack 202 abuts against the cover plate 101, so that the second outer shell 1032 is limited by the cover plate 101 in the longitudinal direction, thereby ensuring a stability of the connection of the lower connection part 103. In some embodiments, the second outer shell 1032 is provided with multiple protrusions with decreasing diameters in a direction from the cover plate 101 towards the cell pack 202. The lower plastic part 112 is provided with multiple recessed parts corresponding to these protrusions, thereby the lower connection part 103 is fixed further.

In some embodiments, the lower plastic part 112 is also provided with a third recessed part 1123 arranged around a perimeter of the second recessed part 1122. A part of the cover plate 101 is clamped in the third recessed part 1123, so that the connection between the lower plastic part 112 and the cover plate 101 is more stable.

As shown in FIG. 1, FIG. 2 and FIG. 7, in one embodiment, the cover plate assembly further includes a sleeve 107, which is located in the first mounting hole 1013 and sleeved on the first inserting pin 1023 and the second inserting pin 1033, so as to fix the first inserting pin 1023 and the second inserting pin 1033 and prevent the first inserting pin 1023 and the second inserting pin 1033 from being scratched by a sidewall of the first mounting hole 1013.

In some embodiments, the transition protrusion 1011 is provided with a fourth recessed part 1014 arranged around a perimeter of the first mounting hole 1013. The cover plate assembly further includes a sealing part 108 mounted in the fourth recessed part 1014 and sleeved on the first inserting pin 1023. The sealing part 108 is configured to seal the first mounting hole 1013 and protecting the first inserting pin 1023. In some embodiments, the sealing part 108 is a rubber sealing ring.

The collection component 240 is located in the housing 201, and is configured to obtain the parameter information inside the housing 201. The parameter information includes the temperature of the cell pack 202 and the pressure inside the housing 201. Correspondingly, the collection component 240 includes multiple sensors 241 and multiple connecting wires 242. The multiple sensors 241 include at least temperature sensor and pressure sensor. Multiple connecting wires 242 is configured for the connection with the sensors 241 and communication connection with the second optical fiber 1031. The collection component 240 can be arranged between the housing 201 and the cell pack 202 or between two cell packs 202. This disclosure does not limit the location of the collection component 240. The collection component 240 can be attached to a sidewall of the housing 201 or to a sidewall of the cell pack 202. Based on the types of signals transmitted by the upper connection part 102 and the lower connection part 103, the connecting wire 242 can be the optical fiber, a metal wire, or the like. When the connecting wire 242 is the metal wire, a signal conversion device can be provided between the connecting wire 242 and the second optical fiber 1031. The signal conversion device is connected with the connecting wire 242 and the second optical fiber 1031, so as to convert an electrical signal of the connecting wire 242 to an optical signal and send it to the second optical fiber 1031.

In some embodiments, the cover plate 101 is further provided with a terminal post 109, a injection hole 110 and a explosion-proof valve 111.

The embodiments of the present disclosure also provide a battery including the cell pack 202, the housing 201 and the cover plate assembly described in the above embodiments. The housing 201 is provided with an accommodation cavity and the cell pack 202 is mounted in the accommodation cavity.

The cover plate assembly includes the cover plate 101, the collection component 240, the lower connection part 103, the upper connection part 102 and the fixing part. The cover plate 101 is mounted in the housing 201 and provided with the transition protrusion 1011, which is provided with the first mounting hole 1013 in communication with the accommodation cavity. The collection component 240 is located in the accommodation cavity and configured to obtain the parameter information inside the housing 201. The first end of the lower connection part 103 is located in the first mounting hole 1013, and the second end of the lower connection part 103 extends into the accommodation cavity and is in communication connection with the collection component 240. The first end of the upper connection part 102 is located in the first mounting hole 1013, and is detachably in communication connection with the first end of the lower connection part 103. The fixing part is configured for mounting the upper connection part 102 on the transition protrusion 1011, and is provided with the second mounting hole that corresponds to the transition protrusion 1011. The second end of the upper connection part 102 passes through the second mounting hole and is connected with the external device.

## Claims

1. A cover plate assembly provided on a housing, **characterized in that** the housing is provided with an accommodation cavity, a cell pack is provided in the accommodation cavity, and the cover plate assembly comprises:
a cover plate provided on the housing (201), the cover plate is provided with a first mounting hole in communication with the accommodation cavity;
a collection component provided in the accommodation cavity and configured to obtain a parameter information inside the housing;
a lower connection part, wherein a first end of the lower connection part is located in the first mounting hole, and a second end of the lower connection part extends into the accommodation cavity and is in communication connection with the collection component; and,
an upper connection part, wherein a first end of the upper connection part is located in the first mounting hole, and is detachably in communication connection with the first end of the lower connection part, and a second end of the upper connection part passes through the first mounting hole.

2. A cover plate assembly according to claim 1, **characterized in that** the upper connection part comprises a first optical fiber connector and a first optical fiber that are interconnected, the lower connection part comprises a second optical fiber connector and a second optical fiber that are interconnected, the first optical fiber connector abuts against the second optical fiber connector, and the second optical fiber is in communication connection with the collection component.

3. The cover plate assembly according to claim 2, **characterized in that** the cover plate assembly further comprises a fixing part configured to mount the upper connection part to the cover plate, the fixing part is provided with a second mounting hole that corresponds to the first mounting hole, and the first optical fiber connector passes through the second mounting hole and abuts against the second optical fiber connector.

4. The cover plate assembly according to claim 3, **characterized in that** the second mounting hole comprises a first sub-hole and a second sub-hole, and the fixing part comprises:
a first fixing part connected to a side of the cover plate away from the cell pack and provided with the first sub-hole, wherein the first optical fiber connector passes through the first sub-hole and is mounted in the first mounting hole;
a second fixing part sleeved on the first fixing part and configured to limit the first optical fiber connector, wherein the second fixing part is provided with the second sub-hole and the first optical fiber passes through the second sub-hole.

5. The cover plate assembly according to claim 4, **characterized in that** the first optical fiber connector comprises a first outer shell and a first inserting pin, the first inserting pin is provided in the first outer shell and is connected to the first optical fiber; the first fixing part is provided with a first recessed part arranged around a perimeter of the first sub-hole, the first outer shell is provided in the first recessed part, and the first inserting pin is provided in the first mounting hole.

6. The cover plate assembly according to claim 5, **characterized in that** the cover plate assembly further comprises a press plate abut between the first outer shell and the second fixing part.

7. The cover plate assembly according to claim 6, **characterized in that**, the first fixing part is provided with a fifth recessed part arranged around a perimeter of the first recessed part, the press plate is provided in the fifth recessed part and abuts against the second fixing part.

8. The cover plate assembly according to claim 7, **characterized in that** a sidewall of the fifth recessed part is provided with a clamping slot, the press plate is provided with a clamping part corresponding to the clamping slot, and the clamping part is clamped in the clamping slot.

9. The cover plate assembly according to any one of claims 5-8, **characterized in that** the second optical fiber connector comprises a second outer shell and a second inserting pin, the second inserting pin is provided in the second outer shell and is connected with the second optical fiber; the second outer shell is located on a side of the cover plate facing the cell pack, and the second inserting pin is provided in the first mounting hole and abuts against the first inserting pin.

10. The cover plate assembly according to claim 9, **characterized in that** the cover plate assembly further comprises a lower plastic part between the cover plate and the cell pack, the lower plastic part is provided with a third mounting hole and a second recessed part arranged around a perimeter of the third mounting hole, and the second outer shell is provided in the second recessed part.

11. The cover plate assembly according to claim 10, **characterized in that** the lower plastic part is provided with a third recessed part arranged around a perimeter of the second recessed part, and a part of the cover plate is clamped in the third recessed part.

12. The cover plate assembly according to any one of claims 9-11, **characterized in that** the cover plate assembly further comprises a sleeve located in the first mounting hole and sleeved on the first inserting pin and the second inserting pin.

13. The cover plate assembly according to any one of claims 6-8, characterized the cover plate assembly further comprises a protective sheath sleeved on the first optical fiber and between the first optical fiber and a sidewall of the second sub-hole , and the first optical fiber is at least partially exposed from the protective sheath.

14. The cover plate assembly according to claim 13, **characterized in that** the protective sheath comprises a cone-shaped body and a first flange arranged around the cone-shaped body, the first flange is clamped in the first recessed part and abuts against the press plate.

15. The cover plate assembly according to claim 13 or claim 14, **characterized in that** a side of the protective sheath facing the cell pack is provided with a sixth recessed part, and a part of the first outer shell is clamped in the sixth recessed part.

16. The cover plate assembly according to any one of claims 4-15, **characterized in that** the cover plate is provided with a transition protrusion, the transition protrusion is provided with the first mounting hole, and the fixing part is configured to mount the connection part on the transition protrusion.

17. The cover plate assembly according to claim 16, **characterized in that** the transition protrusion is provided with a fourth recessed part arranged around a perimeter of the first mounting hole; the cover plate further comprises a sealing part provided in the fourth recessed part and sleeved on the upper connection part.

18. The cover plate assembly according to claim 16 or 17, **characterized in that** the first fixing part comprises a base part and a second flange; the base part is provided with an outer thread, and the second flange is arranged around the base part; the cover plate is provided with a seventh recessed part arranged around the transition protrusion; and the second flange is located in the seventh recessed part and is welded with the cover plate.

19. The cover plate assembly according to any one of claims 4-16, **characterized in that** the first fixing part and the second fixing part are in a threaded connection.

20. A battery, comprising:
a cell pack;
a housing with an accommodation cavity, in which the cell pack is provided; and
a cover plate on the housing, provided with a first mounting hole in communication with the accommodation cavity;
a collection component provided in the accommodation cavity, configured to obtain a parameter information inside the housing;
a lower connection part, wherein a first end of the lower connection part is located in the first mounting hole, and a second end of the lower connection part extends into the accommodation cavity and is in communication connection with the collection component; and
an upper connection part, wherein a first end of the upper connection part is located in the first mounting hole, and is detachably in communication connection with the first end of the lower connection part, and a second end of the upper connection part passes through the first mounting hole.
